# EUROPÄISCHE PATENTSCHRIFT

(11) **EP 3 589 464 B1**
(45) Veröffentlichungstag und Bekanntmachung des Hinweises auf die Patenterteilung: **03.03.2021**
(21) Anmeldenummer: 18752491.3
(22) Anmeldetag: 09.08.2018
(51) Int. Cl.: B26F 3/00, C03B 33/02, B25C 5/00

(54) **VORRICHTUNG ZUM TEILEN VON WERKSTOFFPLATTEN**
DEVICE FOR CUTTING PLATES
DISPOSITIF POUR LA DÉCOUPLE DE PIÈCES PLATTES

(30) Priorität: 30.11.2017 AT 25717 U
(43) Veröffentlichungstag der Anmeldung: 08.01.2020
(73) Patentinhaber: LISEC Austria GmbH, 3353 Seitenstetten (AT)
(72) Erfinder: HASELMAYR, Franz, 3361 Aschbach (AT)
(74) Vertreter: Beer & Partner Patentanwälte KG
(86) Internationale Anmeldenummer: PCT/EP2018/071635
(87) Internationale Veröffentlichungsnummer: WO 2019/105604

(56) Entgegenhaltungen:
- EP-A1- 0 140 794
- EP-A1- 2 998 088
- EP-A2- 1 110 686
- DE-U1-202004 006 637
- US-A- 4 140 038

## Beschreibung

Die Erfindung betrifft eine Vorrichtung zum Bearbeiten von Werkstoffplatten, wie beispielsweise Glasscheiben, mit einer im Wesentlichen vertikalen Stützeinrichtung für das Abstützen einer Werkstoffplatte und mit einer Düse, aus der ein Wasserstrahl zum Schneiden der Werkstoffplatte austritt, wobei die Düse an einer Führung parallel zur Ebene der Stützeinrichtung verfahrbar ist und wobei eine Hochdruckleitung der Wasserstrahlschneideanlage im Wesentlichen quer zur Ebene der Stützeinrichtung geführt ist.

Wasserstrahlschneideanlagen sind, vor allem im Bereich des Bearbeitens von horizontal ausgerichtete Werkstoffplatten bekannt. Auch für das Bearbeiten von im Wesentlichen vertikal ausgerichteten Werkstoffplatten sind solche Anlagen bekannt. Das Bearbeitungsprinzip ist hierbei sehr ähnlich: Über eine Pumpe wird aus einem Speicher Wasser mit hohem Druck zu einer Düse geführt und meist mit einem Schneidemittel versehen. Durch Fokussieren des Hochdruckwasserstrahls (meist 4000 bis 6000 bar) können anschließend Bearbeitungen vorgenommen werden.

Die Führung von Hochdruckleitungen bei Maschinen für das Bearbeiten von horizontal ausgerichteten Werkstoffplatten wird im Wesentlichen über eine wendelförmige Ausgestaltung der Hochdruckleitung, als stabilisierende Ausführung, ausgeführt. Wegen der konstruktiven Starrheit der Hochdruckleitung, der zusätzlichen Stabilisation durch wendelförmige Windungen sowie des freien Raumes in +Z-Richtung (Höhe), stellen diese Merkmale von Bearbeitungsvorrichtungen für die Hochdruckleitung eine ausreichende Stabilität dar.

### Stand der Technik

Eine derartige Vorrichtung ist beispielsweise aus EP 2 998 088 B1 bekannt. Beschrieben wird eine Arbeitsstation zum Bearbeiten von Platten aus Stein, Marmor, Kunststoff, synthetischem Material oder dergleichen mit einem Werktisch, zwei fixierten Seiten, einem Brückenelement, einem Träger, einer Motoreinrichtung, einer elektrischen Einrichtung zum Steuern der Motoreinrichtung, eine sich abnutzende Hilfsarbeitsfläche und einem Arbeitskopf, der von einem Träger getragen wird. Gezeigt wird ferner, dass eine Hochdruckleitung über einen Hochdruckerzeuger (Pumpe) mit Wasser versorgt wird. Weiters ist eine Wendel vorgesehen. Die Vorrichtung beschränkt sich auf das Bearbeiten von horizontal ausgerichteten Werkstoffplatten. Eine besondere Führung für die Hochdruckleitung ist nicht beschrieben.

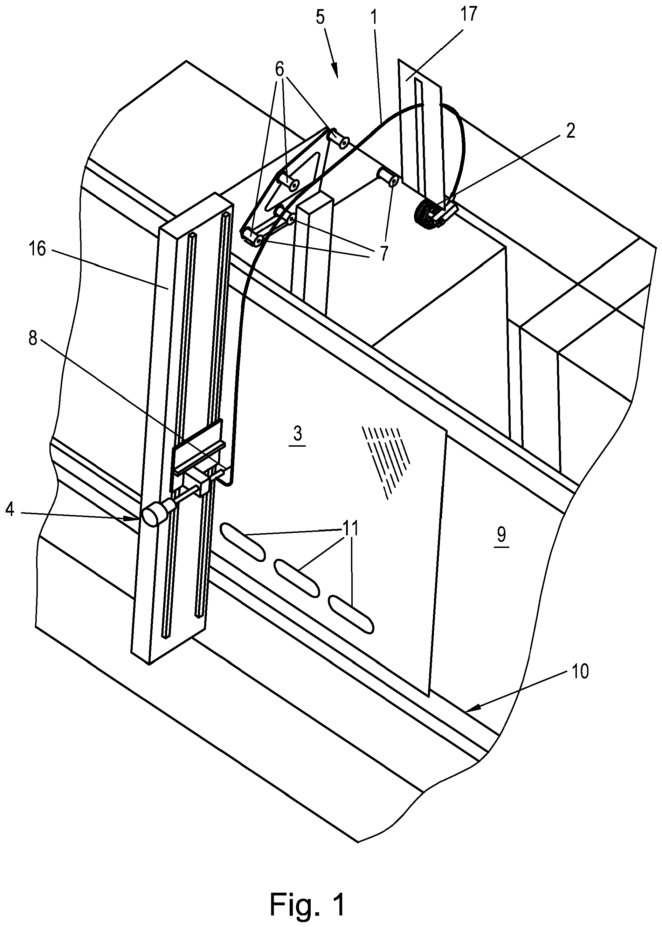

Eine ähnliche Vorrichtung ist in EP 0 140 794 B1 gezeigt. Hierbei handelt es sich um ein Verfahren zum Herstellen einer Verbundglasscheibe, wobei die Polyvinylbutyralfolie durch Wasserstrahlschneiden auf die gewünschten Abmessungen geschnitten wird. Insbesondere Fig. 1 zeigt eine Hochdruckleitung, welche zunächst zu einer Wendel geformt und anschließend zur Hochdruckwasserstrahldüse geführt ist. Beim Verfahren des Arbeitskopfes entlang der X- und Y-Achsen passen sich die Hochdruckleitung sowie die Wendel der neuen Position der Düse an.

Die Maschine der Type WSL der LISEC Austria GmbH ist eine Wasserstrahlschneideanlage zum Bearbeiten von im Wesentlichen vertikal ausgerichteten Werkstoffplatten (Glasplatten). Als Problem ist anzumerken, dass die starre Hochdruckleitung in einem Bogen mit großem Radius zum Bearbeitungskopf geführt werden muss. Diese Führung konnte wegen der einer Hochdruckleitung eigenen Starrheit bisher immer nur direkt vor der Stützeinrichtung, welche der Maschine nacheilend angeordnet ist, erfolgen. Dies hat den Nachteil, dass der Zugang zur Anlage durch die Hochdruckleitung behindert wird und bereits bearbeitete Werkstoffplatten nicht sofort weiterverarbeitet oder transportiert werden können. Ein weiteres Problem ist der Platzbedarf, da auslaufseitig das plattenförmige, bearbeitete Element wegen der Hochdruckleitung nicht abgenommen werden kann und daher ein weiterer Transporttisch vorgesehen werden muss.

Ein weiteres Beispiel einer solchen vertikalen Bearbeitungsanlage ist die Maschine 6033proHD der systron GmbH, welche ebenfalls die Hochdruckleitung in einem Bogen mit großem Radius über die der Bearbeitungsmaschine nachgeordnete Stützwand führt, um die Vertikalbewegung des Schneidekopfes ausgleichen zu können. Als weiteren Nachteil hierbei ist neben dem Platzproblem die Verletzungsgefahr (Gefahr für Bediener bei offenem Riss der Hochdruckleitung) und störende Ästhetik zu nennen.

Aus EP 1 110 686 A2 ist eine Vorrichtung zum Schneiden von im Wesentlichen vertikal ausgerichteten, plattenförmigen Gegenständen, insbesondere Glasplatten, bekannt. Die bekannte Vorrichtung umfasst eine Hochdruckaufbereitungsanlage, eine Hochdruckleitung, eine Führungsschiene, einen auf der Führungsschiene verfahrbaren Bearbeitungskopf, eine Wasserstrahlschneidedüse, eine im Wesentlichen vertikale Stützwand, eine Fördervorrichtung und eine Haltevorrichtung.

### Aufgabe der Erfindung

Die Aufgabe der Erfindung liegt darin, die Nachteile des Standes der Technik zu eliminieren und eine Vorrichtung bereitzustellen, die bei Wasserstrahlschneideanlagen für das Bearbeiten von im Wesentlichen vertikal ausgerichteten Werkstoffplatten die Hochdruckleitung so führt, dass der Zugang zur Anlage nicht behindert und/oder blockiert wird.

### Lösung der Aufgabe

Erfindungsgemäß wird diese Aufgabe mit den Merkmalen des Hauptanspruches gelöst.

Gemäß der Erfindung ist vorgesehen, dass zumindest ein Teil der Hochdruckleitung nicht seitlich, wie bisher, sondern nach hinten hinter die im Wesentlichen vertikale Stützwand der Bearbeitungsanlage geführt ist. Eine Ausrichtung der Stützwand von im Wesentlichen 3 bis 6 Grad zur Vertikalen entspricht dem derzeitigen Standard bei vertikalen Fertigungslinien in der Glasbearbeitung.

Erfindungsgemäß kann in einer Ausführungsform vorgesehen sein, dass für die Begrenzung des maximalen und minimalen Verfahrweges des Bearbeitungskopfes nach oben und nach unten erste und zweite Führungselemente der Hochdruckleitung vorgesehen sind. Dies hat den Vorteil, dass die Lage der Hochdruckleitung nach oben hin begrenzt werden kann und dass diese nach hinten, hinter die Stützwand umgelenkt wird. Bei begrenzten Hallenhöhen kann dies einen vorteilhaften Effekt haben.

Erfindungsgemäß kann vorgesehen sein, dass die Führungen so ausgeführt sind, dass diese die Hochdruckleitung bei Bedarf mehr in die Höhe und weniger nach hinten führen. Erfindungsgemäß kann die erste und zweite Führung der Hochdruckleitung durch Rollen oder andere Führungen verwirklicht sein.

Erfindungsgemäß kann vorgesehen sein, dass die Hochdruckleitung seitlich geführt wird. Dies kann beispielsweise über am Maschinengestell festgelegte Stäbe geschehen, wobei diese Stäbe einen Schlitz begrenzen, der im Wesentlichen so breit ist wie der Außendurchmesser der Hochdruckleitung. Durch diesen Schlitz kann die Hochdruckleitung erfindungsgemäß geführt werden und in ihrer seitlichen Beweglichkeit nach Bedarf eingeschränkt werden. Es können auch andere seitliche Führungen oder nur eine seitliche Führung vorgesehen sein.

Gemäß der Erfindung kann in der Hochdruckleitung ein Drehpunkt vorgesehen sein. Dieser Drehpunkt kann eine Wendel umfassen, welche beispielsweise über eine Lagerwelle und einen Führungshebel gelagert ist.

Erfindungsgemäß kann in einer Ausführungsform vorgesehen sein, dass die Hochdruckleitung beim Bewegen des Bearbeitungskopfes zu einer maximalen oberen Position an den ersten Führungselementen anliegt. Weiters kann gemäß der Erfindung vorgesehen sein, dass die Hochdruckleitung beim Bewegen des Bearbeitungskopfes zu einer maximalen unteren Position an den zweiten Führungselementen geführt ist.

Erfindungsgemäß kann vorgesehen sein, dass die Wendel, welche als Drehpunkt der Hochdruckleitung gelagert sein kann, im Wesentlichen vertikal stehend ausgeführt ist. Erfindungsgemäß kann jedoch auch vorgesehen sein, dass die Wendel horizontal liegend ausgeführt ist.

Weiters kann erfindungsgemäß vorgesehen sein, dass ein Ende der Wendel fixiert ist, wogegen das andere beweglich ist. Das bewegliche Ende führt somit bei liegender (horizontal ausgerichteter) Ausführung eine radiale Kompensation der Bewegungen des Bearbeitungskopfes durch. Bei stehender (vertikal ausgerichteter) Ausführung führt das bewegliche Ende der Wendel bei Verfahren des Bearbeitungskopfes eine Druck- und/oder Zugbewegung aus.

Als "Rückseite" ist im Vorliegenden der gesamte Raum gemeint, welcher von der Glasscheibenlaufebene abgewandt ist. Im Grunde bezieht sich "Rückseite" auf den Bereich, welcher von der Ebene der Stützwand und der Glaslaufebene abgewandt ist.

### Kurzbeschreibung der Zeichnungen

Ausführungsbeispiele der Erfindung werden nun anhand der Zeichnungen genauer beschrieben. Es zeigt:
- Fig. 1: eine erfindungsgemäße Vorrichtung mit mittlerem Verfahrweg des Bearbeitungskopfes,
- Fig. 2a: die erfindungsgemäße Vorrichtung mit nach oben bewegtem Bearbeitungskopf und
- Fig. 2b: die erfindungsgemäße Vorrichtung mit nach unten bewegtem Bearbeitungskopf.

### Beschreibung bevorzugter Ausführungsbeispiele

In Fig. 1 ist eine vertikale Wasserstrahlschneideanlage gezeigt, umfassend im Wesentlichen eine Hochdruckaufbereitungsanlage 12, eine Hochdruckleitung 1, einen entlang einer Führung 16 verfahrbaren Bearbeitungskopf 4, eine Wasserstrahlschneidedüse 8, eine im Wesentlichen vertikale Stützwand 9, eine Fördervorrichtung 10, eine Haltevorrichtung 11, eine Führung 5 mit Führungselementen 6, 7 zum Führen der Hochdruckleitung 1, eine Wendel 2 sowie ein fixiertes Ende 15 der Wendel 2 und ein bewegliches Ende 14 der Wendel 2.

Die Stützwand 9, welche beispielsweise ein Rollenfeld, Walzenfeld oder eine Luftkissenwand sein kann, ist im Wesentlichen lotrecht ausgerichtet und ist vorzugsweise wenig, beispielsweise um 3 bis 6 Grad zur Vertikalen nach hinten geneigt, sodass ein auf einer Fördervorrichtung 10, beispielsweise einem Rollenförderer am unteren Rand der Vorrichtung, randseitig aufstehender plattenförmiger Gegenstand 3 (Werkstoffplatte), vorzugsweise eine Glasscheibe, nach hinten geneigt ist und somit gegen die Stützwand 9 lehnt.

Vor der Stützwand 9 ist eine Führung 16, beispielsweise eine Führungsschiene, vorgesehen, an der ein Schlitten mit dem Bearbeitungskopf 4 auf und ab verstellbar geführt ist, der die Wasserstrahlschneidedüse 8 trägt.

Die Haltevorrichtung 11 kann aus einer oder mehreren Reihen von Saugern bestehen, die an dem plattenförmigen Gegenstand 3 anlegbar sind. Eine weitere Möglichkeit ist es, einen plattenförmigen Gegenstand 3, beispielsweise eine Glasscheibe, über Wasserdruck zu halten oder zu führen. Darüber hinaus sind auch andere Haltevorrichtungen 11 aus dem Stand der Technik denkbar. Beispiele hierfür sind Balken aus denen beidseitig des plattenförmigen Gegenstandes 3 Wasser austritt.

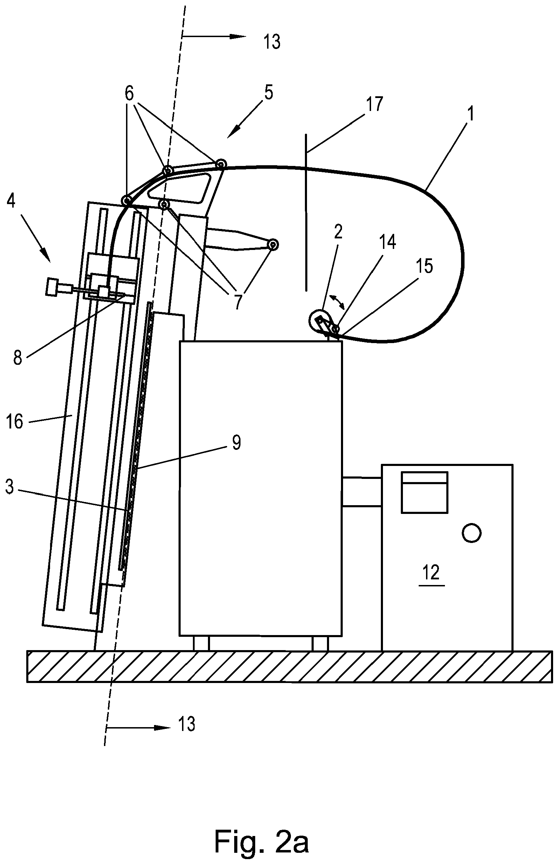

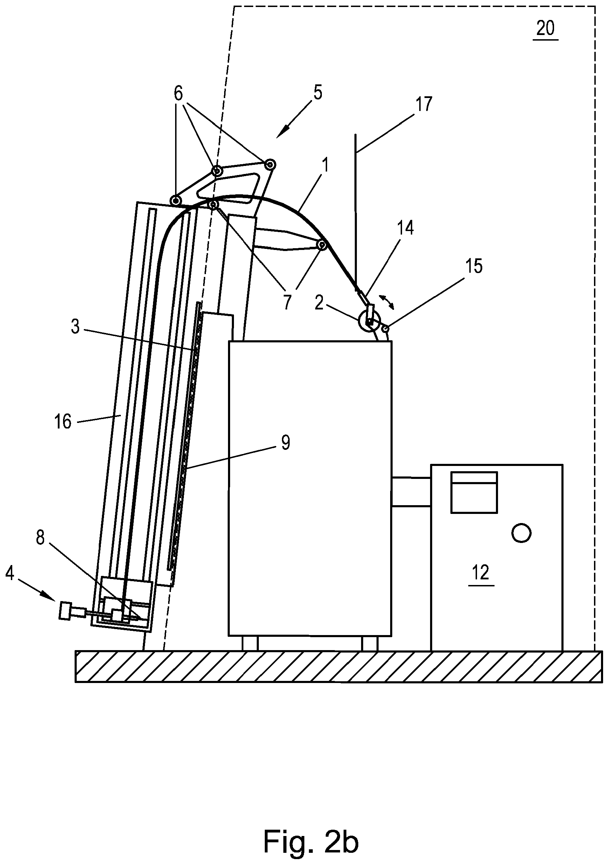

Ferner ist in Fig. 1 eine Führung 5 der Hochdruckleitung 1 gezeigt. Diese umfasst erste Führungselemente 6 für das oberseitige Führen der Hochdruckleitung 1 bei nach oben gefahrenem Bearbeitungskopf 4 (Fig. 2a) und zweite Führungselemente 7 für das unterseitige Führen der Hochdruckleitung 1 bei nach unten gefahrenem Bearbeitungskopf 4 (Fig. 2b).

Die ersten Führungselemente 6 bestehen in dieser Ausführungsform aus drei nacheinander angeordneten Rollen, wogegen die zweiten Führungselemente 7 im Wesentlichen aus zwei voneinander beabstandeten Führungsrollen bestehen.

In einer Ausführungsform kann die erste Rolle der ersten Führungselemente 6 auch die erste Rolle der zweiten Führungselemente 7 darstellen. Die erste Rolle kann als Ankerpunkt zum Umlenken der Hochdruckleitung 1 dienen.

Es sind auch mehr oder weniger Rollen als dargestellt denkbar. Weiters sind auch andere Arten von Führungselementen möglich. Beispielsweise könnten auch zwei gegenüberliegende frei rollbar gelagerte Kugeln oder besonders reibungsarme Werkstoffe in Form von "starren" Führungen vorgesehen sein. Ferner sind Gleitelemente denkbar.

Weiters ist eine Ausführungsform einer horizontal liegend gelagerten Wendel 2 gezeigt, wobei diese in dieser Ausführungsform in ihrer Mittelachse gelagert ist. Ein Ende 14 der Wendel 2 ist fix gelagert, wogegen das andere Ende 15 der Wendel 2 frei beweglich ist. Das frei bewegliche Ende 14 ermöglicht, über die durch das Verfahren des Bearbeitungskopfes 4 hervorgerufene Drehbewegung der Wendel 2 das Anpassen der Hochdruckleitung 1 entsprechend der Führungselemente 6 und 7.

Denkbar wäre auch die Wendel 2 vertikal auszurichten oder schräg anzuordnen. Weiters wäre es auch denkbar, neben der genannten Variante, nur ein Ende der Wendel 2 zu lagern, die Enden der Wendel beidseitig fix oder beidseitig beweglich zu lagern.

In dieser Ausführungsform wird die Wendel 2 über eine Lagerwelle mit einem Führungshebel gelagert. Denkbar sind auch andere Lager. Weiters wäre es auch denkbar, die Wendel 2 nicht in ihrer Mittelachse zu lagern, sondern in einer Position, welche von der Mittelachse entfernt ist. Beispielsweise könnte die Wendel 2 auch an zwei oder mehr Punkten ihrer umlaufenden Hochdruckleitung 1 fixiert sein. Eine weitere mögliche Ausführungsform wäre es, die Wendel 2 wegzulassen. Eine Ausführungsform wäre es dann, den Anschluss der Hochdruckleitung 1 derartig auszugestalten, dass dieser die erforderlichen Freiheitsgrade erlaubt.

In den Fig. 2a und 2b ist eine Ausführung einer erfindungsgemäßen Vorrichtung mit maximal nach oben (Fig. 2a) bzw. nach unten (Fig. 2b) verfahrenem Bearbeitungskopf 4 gezeigt. Die Fig. 2a und 2b zeigen, wie die Führung 5 mit den Führungselementen 6 und 7 mit der Hochdruckleitung 1 und der Wendel 2 zusammenwirken.

Fig. 2a zeigt wie die ersten Führungselemente 6 die Hochdruckleitung 1 erfindungsgemäß zur Rückseite 13 der Stützwand 9 leiten. Durch eine Sekundärführung 17, welche hier durch eine geschlitzte Platte gebildet ist, wird die Hochdruckleitung 1 in einer weiteren Achse (X-Achse) in ihrer Bewegung eingeschränkt oder an der Sekundärführung 17 geführt.

Es sind auch andere Sekundärführungen 17 möglich, beispielsweise durch ein oder mehrere Stabpaare. Diese Stäbe können gleich große oder unterschiedlich große Querschnitte aufweisen. Die Wendel 2 ist bei dieser Ausführungsform horizontal liegend gelagert, wobei ein Ende 15 der Wendel 2 fixiert und das andere Ende 14 beweglich gelagert ist.

Weiters ist in Fig. 2a und 2b die Hochdruckaufbereitungsanlage 12 zur Aufbereitung eines Hochdruckwasserstrahls dargestellt.

In Fig. 2a ist die "Rückseite" 13 durch Pfeile angedeutet. In Fig. 2b hingegen ist "Rückseite" als Raum 20 eingezeichnet.

Zusammenfassend kann die Erfindung beispielhaft wie folgt beschrieben werden:
Bei einer Wasserstrahlschneideanlage zum Bearbeiten von im Wesentlichen vertikal ausgerichteten Werkstoffplatten, beispielsweise Glasplatten, wird zum Verbessern der Zugänglichkeit zum Bereich des Ein- und/oder Austransports der Bearbeitungsanlage und zum Erhöhen der Bedienersicherheit zumindest ein Teil der Hochdruckleitung 1 von einer Führung 5 mit mindestens einem Führungselement 6, 7 zur Rückseite der Vorrichtung hin geführt.

## Patentansprüche

1. Vorrichtung zum Schneiden von im Wesentlichen vertikal ausgerichteten, plattenförmigen Gegenständen (3), insbesondere Glasplatten, wobei die Vorrichtung umfasst:
- eine Hochdruckaufbereitungsanlage (12),
- eine Hochdruckleitung (1),
- eine Führungsschiene (16),
- einen auf der Führungsschiene (16) verfahrbaren Bearbeitungskopf (4),
- eine Wasserstrahlschneidedüse (8),
- eine im Wesentlichen vertikale Stützwand (9) für den plattenförmigen Gegenstand (3),
- eine Fördervorrichtung (10) für plattenförmige Gegenstände (3) und
- eine Haltevorrichtung (11) für den plattenförmigen Gegenstand (3), **dadurch gekennzeichnet, dass** zumindest ein Teil der Hochdruckleitung (1) von einer Führung (5) mit mindestens einem Führungselement (6, 7) zu der dem Bearbeitungskopf (4) gegenüberliegenden Rückseite (13, 20) der Stützwand (9) hin geführt ist.

2. Vorrichtung nach Anspruch 1, **dadurch gekennzeichnet, dass** die Führung (5) erste Führungselemente (6) und zweite Führungselemente (7) umfasst.

3. Vorrichtung nach Anspruch 1 oder 2, **dadurch gekennzeichnet, dass** die Hochdruckleitung (1) mindestens eine Wendel (2) aufweist.

4. Vorrichtung nach Anspruch 3, **dadurch gekennzeichnet, dass** die Wendel (2) ein bewegliches Ende (14) und ein fixiertes Ende (15) aufweist.

5. Vorrichtung nach Anspruch 4, **dadurch gekennzeichnet, dass** das bewegliche Ende (14) der Wendel (2) in einer im Wesentlichen radialen Bewegungsbahn beweglich ist.

6. Vorrichtung nach Anspruch 3 oder 4, **dadurch gekennzeichnet, dass** das bewegliche Ende (14) der Wendel (2) gezogen und/oder gedrückt wird.

7. Vorrichtung nach Anspruch 3, **dadurch gekennzeichnet, dass** die Wendel (2) zwei bewegliche Enden (14) oder zwei fixierte Enden (15) aufweist.

8. Vorrichtung nach einem der Ansprüche 1 bis 7, **dadurch gekennzeichnet, dass** Sekundärführungen (17) vorgesehen sind.

## Claims

1. Device for cutting essentially vertically-oriented, panel-like objects (3), in particular glass panels, whereby the device comprises:
- a high-pressure treatment system (12),
- a high-pressure line (1),
- a guide rail (16),
- a machining head (4) that can move on the guide rail (16),
- a water-jet cutting nozzle (8),
- an essentially vertical support wall (9) for the panel-like object (3),
- a conveying device (10) for panel-like objects (3) and
- a holding device (11) for the panel-like object (3), **characterized in that** at least one section of the high-pressure line (1) is guided by a guide (5) with at least one guide element (6, 7) to the back side (13, 20) of the support wall (9).

2. Device according to claim 1, **characterized in that** the guide (5) comprises first guide elements (6) and second guide elements (7).

3. Device according to claim 1 or 2, **characterized in that** the high-pressure line (1) has at least one coil (2).

4. Device according to claim 3, **characterized in that** the coil (2) has a movable end (14) and an attached end (15).

5. Device according to claim 4, **characterized in that** the movable end (14) of the coil (2) is movable in an essentially radial path.

6. Device according to claim 3 or 4, **characterized in that** the movable end (14) of the coil (2) is pulled and/or pressed.

7. Device according to claim 3, **characterized in that** the coil (2) has two movable ends (14) or two attached ends (15).

8. Device according to one of claims 1 to 7, **characterized in that** secondary guides (17) are provided.

## Revendications

1. Dispositif pour couper des objets (3) en forme de plaque orientés sensiblement verticalement, en particulier des plaques de verre, le dispositif comprenant :
- une installation de préparation de haute pression (12),
- une conduite de haute pression (1),
- un rail de guidage (16),
- une tête d'usinage (4) pouvant être déplacée sur le rail de guidage (16),
- une buse de découpe au jet d'eau (8),
- une paroi d'appui (9) sensiblement verticale pour l'objet en forme de plaque (3),
- un dispositif de transport (10) pour des objets en forme de plaque (3) et
- un dispositif de maintien (11) pour l'objet en forme de plaque (3), **caractérisé en ce**
**qu'**au moins une partie de la conduite de haute pression (1) est guidée par un guide (5) présentant au moins un élément de guidage (6, 7) vers le côté arrière (13, 20), opposé à la tête d'usinage (4), de la paroi d'appui (9).

2. Dispositif selon la revendication 1, **caractérisé en ce que** le guide (5) comprend des premiers éléments de guidage (6) et des seconds éléments de guidage (7).

3. Dispositif selon la revendication 1 ou 2, **caractérisé en ce que** la conduite de haute pression (1) présente au moins une hélice (2).

4. Dispositif selon la revendication 3, **caractérisé en ce que** l'hélice (2) présente une extrémité mobile (14) et une extrémité fixe (15).

5. Dispositif selon la revendication 4, **caractérisé en ce que** l'extrémité mobile (14) de l'hélice (2) est mobile sur une trajectoire de déplacement sensiblement radiale.

6. Dispositif selon la revendication 3 ou 4, **caractérisé en ce que** l'extrémité mobile (14) de l'hélice (2) est tirée et/ou poussée.

7. Dispositif selon la revendication 3, **caractérisé en ce que** l'hélice (2) présente deux extrémités mobiles (14) ou deux extrémités fixes (15).

8. Dispositif selon l'une des revendications 1 à 7, **caractérisé en ce que** des guides secondaires (17) sont prévus.
